# NEUE EUROPÄISCHE PATENTSCHRIFT

(11) **EP 1 511 960 B2**
(45) Veröffentlichungstag und Bekanntmachung des Hinweises auf die Entscheidung über den Einspruch: **29.09.2010**
(45) Hinweis auf die Patenterteilung: 27.06.2007
(21) Anmeldenummer: 03735400.8
(22) Anmeldetag: 16.05.2003
(51) Int. Cl.: F16L 59/20

(54) **ROHRVERBINDUNGSFORMTEIL FÜR VORISOLIERTE ROHRLEITUNGEN**
PIPE-CONNECTOR MOULDED PART FOR PRE-INSULATED PIPE CONDUITS
PIECE MOULEE DE RACCORD POUR CONDUITES PRE-ISOLEES

(30) Priorität: 10.06.2002 DE 10225802
(43) Veröffentlichungstag der Anmeldung: 09.03.2005
(73) Patentinhaber: Georg Fischer Rohrleitungssysteme AG, 8201 Schaffhausen (CH)
(72) Erfinder: MUCKENSCHNABEL, Harald, 78224 Singen (DE); HEIZMANN, Udo, 78166 Donaueschingen (DE)
(74) Vertreter: Grosse, Rainer
(86) Internationale Anmeldenummer: PCT/EP2003/005145
(87) Internationale Veröffentlichungsnummer: WO 2003/104710

(56) Entgegenhaltungen:
- EP-A- 0 182 604
- WO-A-01//92775
- DE-A- 4 123 383
- DE-U- 8 910 407
- DE-U- 29 617 559
- FR-A- 2 501 826
- US-A- 3 463 691

## Beschreibung

Die Erfindung bezieht sich auf eine Rohrleitungsverbindung mit vorisolierten Kunststoffrohrleitungen sowie einem Rohrverbindungsformteil zur Verbindung der Kunststoffrohrleitungen, wobei die Isolation der Kunststoffrohrleitungen aus Polyurethanschaum ausgebildet ist, das Rohrverbindungsformteil als ein Nippel ausgebildet und mit Innenwänden der Kunststoffrohrleitungen verbunden ist und der Nippel am Außenumfang in der Mitte des Nippels einen radial nach außen gerichteten Steg aufweist, der als Anschlag für die Kunststoffrohrleitungen dient.

Im Rohrleitungsbau werden, vor allem bei Anwendungen, bei denen eine gute Isolierung des Mediums gegenüber der Umgebung erforderlich ist, wie beispielsweise bei Rohrleitungssysteme für den Transport von Kälteträgermedien, vermehrt vorisolierte Rohrleitungsabschnitte eingesetzt. Ein gut geeignetes Material zur Isolierung von Kälteträgerrohrleitungen ist geschäumtes Polyurethan. Um die Rohrleitung wird ein Aussenrohr oder ein rohrförmiger Aussenmantel angeordnet, der mittels Abstandshalter konzentrisch um die Rohrleitung auf einem gleichbleibenden Abstand zur Aussenwand der Rohrleitung gehalten wird. Der ringförmige Raum zwischen der Innenwand des Mantels und der Aussenwand der Rohrleitung wird vollständig mit Polyurethanschaum aufgefüllt. Der Polyurethanschaum wird als reaktive schaumbildende Flüssigkeit eingespritzt und der entstehende Schaum härtet aus. Der Schaum haftet gut an den Oberflächen der Rohrleitung und des Aussenmantels und gibt der so vorisolierten Rohrleitung auch eine höhere Steifigkeit.

Wenn mehrere solcher Rohrleitungsabschnitte miteinander verbunden werden müssen, ist der Aufwand für die Vorbereitung und Herstellung der Rohrleitungsverbindung verhältnismässig gross. Die Rohrleitung selbst muss freigelegt werden, vom Schaum gereinigt werden und mittels einer Muffe mit dem nächsten Rohrleitungsabschnitt verbunden werden. Der Aussenmantel muss mittels eines Schrumpfschlauches um die Verbindungsstelle wieder durchgehend gemacht werden und der ringförmige Zwischenraum zwischen Aussenmantel und der Verbindungsstelle mit der Muffe muss mit neuem Schaum gefüllt werden.

Aus der EP182604 B1 ist eine Anordnung und ein Verfahren zur Verbindung von mit Polyurethanschaum vorisolierten Rohrleitungen bekannt. In dem Isoliermaterial im Zwischenraum zwischen Rohrleitung und Aussenmantel wird an der Verbindungsstelle ein ringförmiger Raum ausgebildet. In diesem ringförmigen Raum wird ein spezielles ringförmiges Element eingebracht, dass unter Wärmeeinwirkung schrumpft. Das spezielle Element besteht aus einer Nickel-Titan-Legierung. Nach dem Schrumpfvorgang übt das ringförmige Element eine derart hohe Kraft auf die Verbindungsstelle der zwei Rohrleitungen aus, dass keine weitere Verbindung der Rohrleitungen erforderlich ist.

Anstelle des speziellen Elementes kann auch eine handelsübliche Muffe oder Klebemuffe verwendet werden. Aus dem Verbindungsbereich muss vor der Herstellung der Verbindung dazu auch der Polyurethanschaum entfernt werden. Um eine gute Verbindung zwischen Muffe und Rohr zu erreichen, muss die Aussenseite des Innenrohres mit einem speziellen Schälgerät geschält und gereinigt werden.

Aus der US 3463691 ist weiterhin ein Verfahren zur Herstellung eines Rohrleitungssystems für flüssige Wärme- oder Käfteträgerflüssigkeiten bekannt. Die vorisolierten Rohrleitungen werden mittels eines Nippels miteinander verbunden. Der Nippel weist am Aussenumfang eine Schulter auf. Im Bereich der Schulter ist der Nippel ebenfalls vorisoliert.

Ausgehend von diesem Stand der Technik ist es Aufgabe der Erfindung, eine Rohrleitungsverbindung mit vorisolierten Kunststoffrohrleitungen anzugeben, die eine mediumsdichte, kostengünstige und umweltschonende Verbindung von zwei Rohrleitungsabschnitten an jeder beliebigen Stelle der Rohrleitung ermöglicht.

Diese Aufgabe wird gelöst durch eine Rohrleitungsverbindung mit vorisolierten Rohrleitungen nach Anspruch 1 und ein Verfahren nach Anspruch 5.

Es ist von Vorteil, dass für die Verbindung der Rohrleitungsabschnitte kein Isoliermaterial und kein Aussenrohrmaterial entfernt und entsorgt werden müssen. Dies wird dadurch erreicht, dass die mit Polyurethanschaum vorisolierte Rohrleitungsabschnitte im Verbindungsbereich auf einem zum Innendurchmesser der Innenrohre passenden Nippel aufschiebbar angeordnet sind.

Es ist auch von Vorteil, dass für die Verbindung kein zusätzlicher Vorbereitungsaufwand und keine Werkzeuge, wie beispielsweise Schälwerkzeuge für die Aussenseite des Innenrohres, notwendig sind. Die mit einander zu verbindenden Innenflächen der Rohrleitung und des Nippels im Verbindungsbereich sind nicht durch den Isolationsprozess behandelt oder mit Schaumresten verunreinigt.

Es ist auch von Vorteil, dass im Verbindungsbereich zwischen der Rohrleitung und dem Rohrverbindungsformteil die Verbindungsbedingungen aufeinander abgestimmt und reproduzierbar sind. Dies wird dadurch erreicht, dass im Verbindungsbereich der Rohrinnendurchmesser und der Nippelaussendurchmesser genau definierbar sind.

Insgesamt wird durch die Verbindung auf der Innenseite des Innenrohres viel Material und Zeit gespart. Die Entfernung des Aussenrohres und des Polyurethanschaumes, die umweltgerechte Entsorgung der Polyurethanschaumreste und die aufwendige Reinigung der mit Polyurethanschaum verunreinigten Aussenseite des Innenrohres entfallen. Die Anschaffung eines speziellen Schälgerätes für die Aussenseite des Innenrohres kann unterbleiben. Die Rohrleitungsabschnitte der mit Polyurethanschaum vorisolierten Rohrleitungen, die relativ teuer sind, können praktisch ohne Abfall und Verluste verarbeitet werden.

Ein Ausführungsbeispiel der Erfindung wird anhand der Figuren beschrieben. Es zeigen:
Figur 1 einen Schnitt durch eine Verbindung von zwei mit Polyurethanschaum vorisolierten Rohrleitungsabschnitten gemäss dem Stand der Technik, und
Figur 2 einen Schnitt durch eine Verbindung von zwei mit Polyurethanschaum vorisolierten Rohrleitungsabschnitten mit einem erfindungsgemässen Nippel.

In Figur 1 ist eine bekannte Verbindung von zwei Rohrleitungen für temperaturempfindliche Medien, beispielsweise für Kälteträger in einem industriellen Kühlleitungssystem, geschnitten dargestellt. Die Rohrleitungen bestehen aus einem Innenrohr 1,2, sind mit einer Schicht 3 aus Polyurethanschaum vorisoliert und mit einem Aussenrohr 4,5 ummantelt. Die Innenrohre sind aus einem Acrylnitril-Butadien-Styrol-Copolymer (=ABS) und die Aussenrohre aus einem Polyethylen hoher Dichte (=PE-HD). Für die Kälteisolation eignet sich Polyurethanschaum (=PUR) am besten. Die Verbindung der Rohrleitung wird konventionell mit einer Klebemuffe 6 hergestellt. Die vorisolierten Rohrleitungen sind mit Nenndurchmessern von 16 bis 225 mm erhältlich.

Die Herstellung der Verbindung verläuft wie folgt: Im Verbindungsbereich werden die Rohrleitungen durchtrennt um die Enden der Innenrohre 1,2 freizulegen. Das Aussenrohr 4,5 und die Polyurethanschaumschicht 3 werden aus dem Verbindungsbereich entfernt. Nachdem die Schicht 3 entfernt wurde, muss die Aussenseite des Innenrohres 1,2 gereinigt und für die Verbindung vorbereitet werden. Der Polyurethanschaum verbindet sich dauerhaft mit den meisten Oberflächen. Mit einem speziellen Schälgerät muss die Aussenseite des Innenrohres 1,2 abgeschält werden. Dabei muss darauf geachtet werden, dass nicht zuviel Material des Innenrohres entfernt wird, da sonst ein zu grosser Spalt zwischen der Innenwand der Muffe 6 und der Aussenwand des Rohres 1,2 entstehen würde, der nur schwer richtig und mediumsdicht zu verbinden ist.

Nachdem beide Rohrleitungsabschnitte so vorbereitet sind, wird eine Klebeverbindung oder eine Schweissverbindung mit der Muffe 6 hergestellt. Auf der Innenseite des Innenrohres bildet der Klebstoff an der Stelle, wo die zwei Innenrohre in die Klebemuffe 6 zusammengestossen werden einen Wulst 7. Auch beim sogenannten Muffenschweissverfahren können Wülste 7 aus geschmolzenem Kunststoffmaterial entstehen. Anschliessend wird der Raum, der zwischen der Muffe 6 und dem Aussenrohr 4,5 übrig bleibt, wieder mit Polyurethanschaum aufgefüllt.

Hierzu werden normalerweise sogenannte Halbschalen, oder halbringförmige Elemente aus Polyurethanschaum, die im Handel erhältlich sind, verwendet. Die Halbschalen haben eine Länge, die übereinstimmt mit der Länge des Verbindungsbereiches.Die Länge jeder Halbschale ist etwas grösser als die doppelte Länge der Polyurethanschaumschichten 3, die an beiden Rohrleitungsabschnitten entfernt wurden um die Enden für die Verklebung frei zu geben. Zum Schluss wird die Rohrverbindungsstelle mit einem Schrumpfschlauch 8 aus Polyethylen und mit einem Dichtmittel oder einem klebenden Band 9,10 wieder abgedichtet gegen Eintritt von Luft oder Feuchtigkeit.

In Figur 2 ist eine neue Verbindung von zwei Rohrleitungen für temperaturempfindliche Medien, beispielsweise für Kälteträger in einem industriellen Kühlleitungssystem, geschnitten dargestellt. Die Rohrleitungen sind von Innen nach Aussen aufgebaut aus: einem Innenrohr 11,12 aus Kunststoff, beispielsweise Acrylnitril-Butadien-Styrol-Copolymer, einer Schicht 13,14 aus Isolierschaum, beispielsweise Polyurethanschaum und einem Aussenrohr 15,16, beispielsweise aus Polyethylen hoher Dichte. Um während dem Einbringen und Aushärten des Polyurethanschaumes das Aussenrohr 15,16 auf einem gleichbleibenden Abstand konzentrisch um das Innenrohr 11,12 zu halten, sind auf regelmässigen Abständen in der Längsrichtung der Rohrleitung Abstandshalter 17,18 aus Kunststoff zwischen dem Innenrohr 11,12 und dem Aussenrohr 15,16 angeordnet. Die Durchmesserunterschiede des Innenrohres und des Aussenrohres, die zu unterschiedlich grossen Zwischenräumen für die Schaumschicht 13,14 führen, werden durch die Verwendung der Abstandshalter 17,18 automatisch ausgeglichen.

Die Verbindung der zwei Rohrleitungen wird mittels eines Nippels 19 aus einem Kunststoff hergestellt, der mit dem Kunststoff des Innenrohres 11,12 verbindbar, das heisst klebbar oder schweissbar, und kompatibel ist. Der Nippel 19 kann vor der Herstellung der Verbindung mit den Rohrleitungen haftend gemacht werden. Hierzu wird man entweder die miteinander zu verbindenden Flächen des Nippels 19 und der Innenrohre 11,12 in einem sogenannten Muffenschweissverfahren aufheizen, oder man wird die zu verbindenden Flächen mit einem geeigneten Klebstoff klebend ausrüsten. Der Nippel 19 weist in der Mitte am Aussenumfang einen radial nach Aussen gerichteten ringförmigen Steg 20 auf, der bei der Verbindung als Anschlag für die Innenrohre 11,12 dient. Der Steg 20 stellt sicher, dass beide Rohre 11,12 tief genug über den Nippel 19 geschoben werden. Der Nippel 19 weist am Anfang und am Ende nach Innen abgerundete oder abgeschrägte Wandbereiche 21,22 auf. Hiermit wird erreicht, dass die Strömung des Kälteträgermediums durch die Rohrleitung möglichst wenig behindert wird, und dass der Druckverlust in der Rohrleitung aufgrund von Durchmesseränderungen möglichst klein gehalten wird.

Die Innenrohre 11,12 können am Ende auf der Rohrinnenseite mit einer sogenannten Einzugsfase abgeschrägt oder mit einem Einzugsradius abgerundet sein. In Figur 2 weisen die Enden der Innenrohre 11,12 eine schräg nach innen gerichtete Fase 23,24, die sogenannte Einzugsfase 23,24 auf. Hiermit wird erreicht, dass die Rohrleitungen möglichst einfach auf dem Nippel 19 aufgeschoben werden können. Die Fase 23,24 dient beim Kleben auch zum Einziehen von überflüssigem Material, das beim Aufschieben der Rohrleitungen auf den Nippel 19 verdrängt wird. Wenn der Innendurchmesser der Innenrohre 11,12 zu klein ist im Vergleich zum Aussendurchmesser des Nippels 19, müssen die Innenrohre 11,12 vorgängig kalibriert werden, dass heisst in einem Schäl- oder Schabvorgang auf einem passenden Innendurchmesser gebracht werden.

Vor dem Verbindungsvorgang werden die Rohrleitungsabschnitte möglichst genau zur Rohrleitungsachse ausgerichtet. Wenn die Rohrteitungsabschnitte auf die Baustelle in kürzeren Längen als den vom Hersteller gelieferten Längen verarbeitet werden, dann muss als einzige Vorbereitung an der Schnittstelle eine neue Fase 23, 24 angebracht werden. Von der Isolierschicht 13,14 und von dem Aussenrohr 15,16 wird kein Material entfernt. In allen Fällen ist bei Verwendung des Nippels 19 keine Entfernung von Polyurethanschaum oder Polyethylen erforderlich. Es muss kein Polyurethanschaum oder Polyethylen entsorgt werden. Die Verbindung auf der Innenseite des Rohres 11,12 ist einfacher, weil keine Polyurethanrückstände von der Oberfläche des Innenrohres 11,12 entfernt werden müssen.

Vor der Herstellung der Verbindung wird über eines der Rohrleitungen lose ein sogenannter Schrumpfschlauch 25 gelegt, das heisst ein Schlauch aus einem Kunststoffmaterial, das derart modifiziert wurde, dass es unter Wärmeeinwirkung schrumpft. Nach dem Aushärten der Verbindung zwischen Nippel 19 und den Innenrohren 11,12 findet eine Prüfung der Dichtheit der Verbindung statt.

Durch die Ausbildung des Steges 20 entsteht zwischen den Rohrleitungen, das heisst zwischen den Isolierschaumschichten 13,14 und den Aussenrohren 15,16, im Bereich des Steges 20 einen Spalt 31. Dieser Spalt 31 kann bei der Prüfung auf Druckdichtheit, die anschliessend an dem eigentlichen Verbindungsvorgang und vor dem Verschliessen mit dem Schrumpfschlauch durchgeführt wird, gut eingesehen werden. Bei der Druckdichtheitsprüfung kann bei einer nicht dichtenden Verbindung in dem Spalt 31 beobachtet werden ob Medium aus dem Innenrohr 11,12 austritt. Wenn kein Spalt 31 vorhanden wäre, würde das austretende Prüfmittel von dem Isolierschaum aufgesaugt werden.

Nach dem Prüfen der Dichtheit der Verbindung zwischen Nippel 19 und den Innenrohren 11,12 werden die Enden der Aussenrohre 15,16 im Bereich des Nippels 19 mit einem klebenden Dichtband oder mit einem dichtenden Klebband 27,28 umwickelt. Um eine bessere Haftung an dem Schrumpfschlauch 25 und an dem Aussenrohr 15,16 zu erreichen, kann das Klebband 27,28 doppelseitig klebend ausgerüstet sein. Eine gute Abdichtung im Bereich des Schrumpfschlauches 25 ist notwendig um die Isolationseigenschaften des Isolierschaums 13,14 auch nach der Verbindung beizubehalten. Anschliessend wird der Schrumpfschlauch 25 durch Wärmeeinwirkung im Verbindungsbereich auf den Durchmesser der Aussenrohre 15,16 geschrumpft.

## Patentansprüche

1. Rohrleitungsverbindung mit vorisolierten Kunststoffrohrleitungen sowie einem Rohrverbindungsformteil zur Verbindung der Kunststoffrohrleitungen, wobei die Isolation der Kunststaffrohrleitungen aus Polyurethanschaum ausgebildet ist, das Rohrverbindungsformteil als ein Nippel (19) ausgebildet und mit Innenwänden der Kunststoffrohrleitungen verbunden ist und der Nippel (19) am Auβenumfang in der Mitte des Nippels (19) einen radial nach außen gerichteten Steg (20) aufweist, der als Anschlag für die Kunststoffrohrleitungen dient, **dadurch gekennzeichnet, dass** im Bereich des Stegs (20) zwischen den Kunststoffrohrleitungen ein Spalt (31) ausgebildet ist.

2. Rohrleitungsverbindung nach Anspruch 1, **dadurch gekennzeichnet, dass** der Nippel (19) als ein in einem Muffenschweißverfahren verbindbarer Nippel (19) ausgebildet ist.

3. Rohrleitungsverbindung nach Anspruch 1, **dadurch gekennzeichnet, dass** der Nippel (19) als ein in einem Verklebungsverfahren verbindbarer Klebenippel (19) ausgebildet ist.

4. Rohrleitungsverbindung nach mindestens einem der Ansprüche 1 bis 3, **dadurch gekennzeichnet, dass** der Nippel (19) am Anfang und am Ende sich nach innen verjüngende abgeschrägte oder abgerundete Innenwandbereiche (21,22) aufweist, die zur Optimierung der Strömung in der Rohrleitung dienen.

5. Verfahren zum Herstellen einer Rohrleitungsverbindung gemäß mindestens einem der Ansprüche 1 bis 4, wobei die Rohrleitungsverbindung mit Polyurethanschaum vorisolierte Kunststoffrohrleitungen und ein als Nippel (19) ausgebildetes Rohrverbindungsformteil aufweist und die Kunststoffrohrleitungen zumindest ein Innenrohr (11,12), eine Schicht (13,14) aus dem Polyurethanschaum und ein Außenrohr (15,16) aufweisen, umfassend zumindest die folgenden Schritte:
- rechtwinkliges Abschneiden der zu verbindenden Kunststoffrohrleitungen,
- Kalibrieren des Innendurchmessers der Innenrohre (11,12),
- Anfasen der Innenwand des Innenrohrs (11,12),
- Aufschieben eines Schrumpfschlauchs (25) auf eines der Außenrohre (15,16),
- Haftfähigvorbereiten von Verbindungsflächen des Nippels (19) und des Innenrohrs (11,12) durch Wärmeeinwirkung oder durch Klebstoffeinwirkung,
- Zusammenschieben der zu verbindenden Kunststoffrohrleitungen und des Nippels (19) bis zu einem Steg (20) des Nippels (19),
- Abwarten einer Wartezeit bis zur Erreichung der Festigkeit der Verbindung.

## Claims

1. Pipe conduit connection having pre-insulated plastic pipe conduits and a pipe-connection molded part for connection of the plastic pipe conduits, the insulation of the plastic pipe conduits being formed from polyurethane foam, the pipe-connection molded part being designed as a nipple (19) and connected to the inner walls of the plastic pipe conduits and the nipple (19) having a web (20) directed radially outward on the outer circumference in the center of the nipple (19) and serving as a stop for the plastic pipe conduits **characterized in that** a gap (31) is formed in the region of the web (20) between the plastic pipe conduits.

2. Pipe conduit connection according to claim 1, **characterized in that** the nipple (19) is designed as a nipple (19) which can be connected by a sleeve welding process.

3. Pipe conduit connection according to claim 1, **characterized in that** the nipple (19) is designed as an adhesive nipple (19) which can be connected by an adhesive bonding process.

4. Pipe conduit connection according to at least one of claims 1 to 3, **characterized in that** the nipple (19), at the start and at the end, has beveled or rounded-off inner wall regions (21, 22) which taper inward and serve to optimize the flow in the pipe conduit.

5. Method of producing a pipe conduit connection according to at least one of claims 1 to 4, wherein the pipe conduit connection comprises plastic pipe conduits pre-insulated with polyurethane foam and a pipe-connection molded part being designed as a nipple (19) and wherein the plastic pipe conduits comprise at least an inner pipe (11, 12), a layer (13, 14) made of the polyurethane foam and an outer pipe (15, 16), comprising at least the following steps:
- right-angled cutting off of the plastic pipe conduits to be connected,
- calibrating the inside diameter of the inner pipes (11,12),
- beveling the inner wall of the inner pipe (11, 12),
- pushing a heat-shrinkable tube (25) into position on one of the outer pipes (15, 16),
- preparing the connecting surfaces of the nipple (19) and of the inner pipe (11, 12) by the action of heat or by the action of adhesive in such a way that they are capable of adhesion,
- pushing together the plastic pipe conduits to be connected and the nipple (19) up to a web (20) of the nipple (19),
- waiting, during a waiting period, until the strength of the connection is achieved,
- testing the tightness of the connection between nipple (19) and inner pipes (11, 12),
- coating the outer pipe (15, 16) with a sealing agent (27, 28), and
- shrinking the heat-shrinkable tube (25) by the action of heat.

## Revendications

1. Liaison de conduits tubulaires avec des conduits tubulaires en matière synthétique pré-isolés ainsi qu'un élément moulé (19) de liaison de tubes pour la liaison des conduits tubulaires en matière synthétique, dans lesquels l'isolation des conduits tubulaires en matière synthétique est formée d'une mousse de polyuréthane, l'élément moulé de liaison de tubes étant former en tant qu'un mamelon (19) et étant relier aux parois intérieures des conduits tubulaires en matière synthétique, le mamelon (19) présentant au milieu de la périphérie extérieure du mamelon (19) une collerette (20) orientée radialement vers l'extérieur qui sert de butée pour les conduits tubulaires en matière synthétique, **caractérisé en ce que** dans la zone de la collerette (20), un interstice (31) est formé entre les conduits tubulaires en matière synthétique.

2. Liaison de conduits tubulaires selon la revendication 1, **caractérisé en ce que** le mamelon (19) est configuré comme mamelon (19) qui peut être relié dans une opération de soudage par manchon.

3. Liaison de conduits tubulaires selon la revendication 1, **caractérisé en ce que** le mamelon (19) est configuré comme mamelon adhésif (19) qui peut être relié dans une opération de collage.

4. Liaison de conduits tubulaires selon au moins l'une des revendications 1 à 3, **caractérisé en ce qu'**à son début et à son extrémité, le mamelon (19) présente des zones de parois intérieures (21, 22) chanfreinées ou arrondies de manière à se rétrécir vers l'intérieur et qui servent à optimiser l'écoulement dans le conduit tubulaire.

5. Procédé pour construire une liaison de conduits tubulaires selon au moins l'une des revendications 1 à 4, dans lequel la liaison de conduits tubulaires présente des conduits tubulaires en matière synthétique pré-isolés par de la mousse de polyuréthane et un élément moulé de liaison de tubes étant former en tant qu'un mamelon (19), et dans lequel les conduits tubulaires en matière synthétique présentés au moins un tube intérieur (11, 12), une couche (13, 14) de la mousse de polyuréthane et un tube extérieur (15, 16), lequel procédé comprend au moins les étapes suivantes :
- découpe à angle droit des conduits tubulaires en matière synthétique à relier,
- calibrage du diamètre intérieur des tubes intérieurs (11,12),
- chanfreinage de la paroi intérieure du tube intérieur (11, 12),
- pose d'un manchon rétractable (25) sur l'un des tubes extérieurs (15,16),
- préparation de l'adhérence des surfaces de liaison du mamelon (19) et du tube intérieur (11, 12) par l'action de la chaleur ou par l'action d'un adhésif,
- assemblage des conduits tubulaires en matière synthétique à relier et du mamelon (19) jusqu'une collerette (20) du mamelon (19),
- attente du temps nécessaire pour obtenir la solidification de la liaison,
- vérification de l'étanchéité de la liaison entre le mamelon (19) et les tubes intérieurs (11, 12),
- application d'un agent d'étanchéité (27, 28) sur la tube extérieur (15, 16) et
- rétraction du manchon rétractable (25) par l'action de la chaleur.
